# EUROPEAN PATENT SPECIFICATION

(11) **EP 2 561 262 B1**
(45) Date of publication and mention of the grant of the patent: **23.01.2019**
(21) Application number: 11772305.6
(22) Date of filing: 18.04.2011
(51) Int. Cl.: F16M 11/04, F16M 13/00, F16F 15/03, F16M 11/10, F16M 11/18, F16M 11/42, H02K 49/04

(54) **DEVICE FOR DAMPING OF PENDULAR MOVEMENTS AND METHOD OF USING SAME**
VORRICHTUNG ZUR ABSCHWÄCHUNG VON PENDELBEWEGUNGEN UND VERFAHREN ZU IHRER VERWENDUNG
DISPOSITIF D'AMORTISSEMENT DES MOUVEMENTS PENDULAIRES ET MÉTHODE D'UTILISATION DE CELUI-CI

(30) Priority: 13.04.2011 NO 20110562; 23.04.2010 NO 20100592
(43) Date of publication of application: 27.02.2013
(73) Proprietor: Salte Tekniske AS, 4353 Klepp Stasjon (NO); NMI Holdinng AS, 4340 Bryne (NO)
(72) Inventor: SALTE, Terje, N-4340 Bryne (NO)
(74) Representative: Håmsø Patentbyrå AS
(86) International application number: PCT/NO2011/000130
(87) International publication number: WO 2011/133044

(56) References cited:
- GB-A- 2 103 023
- NO-A- 20 014 188
- NO-A- 20 014 188
- US-A- 4 612 469
- US-A- 5 031 900
- US-A- 5 656 001
- Ndfeb Holding: "Magnet Arrangement and Magnetic Circuits of Magnetic Assembly", , 14 December 2007 (2007-12-14), XP055412697, Retrieved from the Internet: URL:https://web.archive.org/web/2007121421 2958/http://www.ndfebmagnets.de/MA_Arrang. htm [retrieved on 2017-10-05]

## Description

The invention relates to a damping mechanism for a body which is set into pendular movements around one axis. More particularly, the invention relates to a damping mechanism using one or more magnets to create eddy currents in an electrically conductive anchor plate. A method of damping pendular movements and the use of such a damper are described as well, the damper being provided with an instrument or an instrument casing. By means of the damper, the longitudinal axis of the instrument or instrument casing is quickly brought approximately to rest.

An eddy current arises in a body of an electrically conductive material when the body is moved in a magnetic field, or when the magnetic field varies over time. A circulating current of electrons arises then within the body, an eddy current. According to Lenz's law, the eddy current creates an induced magnetic field whose direction is the opposite of that of the magnetic field creating the eddy current. A resistance to motion is thereby created between the magnet and the electric body. The magnitude of the resistance depends on the magnetic field strength, the electrical conductivity of the body and how quickly the magnetic field changes.

Permanent magnets may be constituted by various materials such as magnetite, sinterings such as alnico (aluminium, nickel, cobalt), samarium-cobalt and neodymium (neodymium, iron, boron) and alloys such as ticonal (titanium, cobalt, nickel, aluminium).

By a multipolar magnet are meant here two or more single magnets which are placed beside each other, so that every other magnet has the same north-south-oriented magnetic field, whereas the intermediate magnets have magnetic fields of the opposite orientation. A multipolar magnet also includes cast or sintered magnetizable material which is magnetized in a manner known *per se,* after having been formed into one piece, and in such a manner that different portions or sectors of the magnet formed have different magnetic polarities.

By a ferrite-containing material is meant here a material with high iron content, such as soft steel, known within the art also as carbon steel.

By a magnetic system is meant here that the magnet is combined with a ferrite-containing material so that the magnetic field strength in a portion is increased in relation to the field strength of the magnet in the absence of the ferrite-containing material.

By instruments is meant here measuring equipment such as an anemometer, a distance meter, an angle gauge and optical equipment like a camera and a laser. One or more instruments may be placed in an instrument casing. The instrument casing protects the instrument, and the instrument casing may be provided with first means for attaching instruments to the instrument casing and second means for attaching the instrument casing to a platform.

The instrument casing may be attached to platforms of various kinds, and the platform may be stationary, rotatable, tiltable and it may be movable.

For some instruments it is desirable that, in their position of application, they have a constant direction of measuring or direction of observation. In many cases this is achieved by them being fixedly attached to the platform. Such a solution cannot be used when the platform itself is either rotatable or tiltable or when it is exposed to external forces. An example is a platform in the form of a crane boom, the crane boom being raisable or lowerable. Another example is platforms on a vessel, the vessel being exposed to wave movements. Instruments which are used on rotatable, tiltable and movable platforms may be rotatably attached to the platform for them to maintain their fixed directions of measuring or directions of observation.

The use of gyro-stabilized instruments is known. This is a reliable solution to keep a fixed direction of measurement or direction of observation. Gyros have the drawback of being relatively expensive. They also depend on an energy source for the operation of the gyro. The energy source may be a battery or solar cells which may be placed in the instrument casing or it may be an energy source which supplies the gyro with energy via a cable.

An instrument in an instrument casing which is horizontally rotatably attached to a platform may be held in position by means of a weight which will adjust the instrument casing in accordance with the local gravitation. The instrument casing may be a weight in itself. A weight has the drawback of oscillating for a long time around its centre of rotation before coming to rest. On board a vessel it will, in practice, not come to rest. If the instrument is exposed to wind, it will not come to rest either.

It has gradually become usual to place a camera in a crane boom to monitor the load area from above. This is particularly appropriate when it is a question of lifting jobs in areas in which the crane operator is prevented from having direct sight contact with the loading area. During lifting operations, the free end portion of a crane boom is almost continuously raised and lowered to change the radial distance of the load from the vertical rotational axis of the crane. The angle of the crane boom relative to the horizontal plane is thus changed by the boom being rotated around its axis of suspension. Thus, for the camera to be directed towards the loading area, the suspension of the camera in the crane boom must be arranged to enable an, in the main, continuous angular change relative to the boom. A camera of this type is usually suspended in such a way that it will adjust itself towards the desired area by means of gravity. When the crane turns around its own vertical axis, the centrifugal force will make a camera hanging rotatably in the crane boom swing outwards from its equilibrium position even without the angle of the crane boom being changed. The camera thereby leaves its desired position and does not fall back until the turning motion is ended.

The relative movement of the camera relative to the crane boom must be damped in order for undesired pendular movements of the camera not to occur. There are several known ways of damping such oscillations of a system which is based on a weight. A damping mechanism may be a friction brake. Friction brakes have the drawback of a momentum being required before the friction is overcome. A camera in a crane boom will, by a small movement of the crane boom, leave the desired position before the frictional force of the brake is overcome. Friction brakes have also turned out to transmit an undue amount of vibration from the crane boom to the camera. A damping mechanism may be fluid-based. An oil is conveyed through narrow passages. Oils may change their fluidities with temperature, so that by cold ambient temperatures the oil is too thick and by warm ambient temperatures the oil is too thin to provide damping. The material of the damper may also alter its dimension with a change in the temperature, which alters the cross-sectional area of the passage for the oil.

A damping mechanism may be based on eddy currents as described above. Patent document US 5,736,798 discloses a passive magnetic damper which counteracts small vibrations in several directions and around several axes and is specially designed for use in the grinding and polishing of mirrors. The anchor plate is bent and forms a circular castellation which allows an upper set of magnets and a lower set of magnets to be placed between each other, so that the upper set of magnets does not face the lower set of magnets pole to pole, and so that the anchor plate lies between the magnets. The castellated shape of the anchor plate makes the anchor plate not freely rotatable in the casing holding the magnets.

Using an eddy current to brake a rotating disc or impart rotational resistance to a rotating disc is known within the art. As examples, patent document JP 58109653 may be cited, which discloses the production of a great braking force on a slowly rotating disc. A series of electromagnets is arranged circularly on either side of the disc. The patent document teaches that pairs of opposite magnets may either have different polarities or same polarities in the poles facing in towards the disc. The patent document US 5,031,900 discloses a training apparatus in which the use of electromagnets on either side of a flywheel formed by an aluminium disc constitutes an adjustable resistance. The electromagnets make a pair having one magnet on either side of the flywheel. The patent document 5,656,001, too, discloses training apparatuses. A series of electromagnets is arranged circularly on either side of a disc which is constituted by an electrically conductive material. Thereby an adjustable resistance is created, which can be utilized in training. The patent documents US 5,031,900 and US 5,656,001 disclose relatively fast-rotating discs and it is not taught that the magnets are arranged multipolarly or provided with a backing plate formed by a ferrite-containing material, or that the magnets are surrounded by a ferrite-containing jacket.

The applicant's own patent document NO20014188 discloses a damper/brake which seeks to solve the problem of damping pendular movements. At least one electrically conductive plate which forms a braking disc is movably arranged between at least one pair of permanent magnets. The poles of the pair of permanent magnets are arranged in such a way that the permanent magnets are mutually attractive. The pairs of magnets are arranged in a semicircle in holding plates. Holding plates and brake disc form an open structure. The patent document does not teach that the magnets are multipolarly arranged or provided with a backing plate constituted by a ferrite-containing material, or that the magnets are surrounded by a ferrite-containing jacket.

An eddy current damper may be provided with permanent magnets or with electromagnets. Electromagnets have the drawback of requiring electrical energy from an energy source. In environments in which there is a risk of explosions, such equipment requires encasing in accordance with known standards. This makes such a damper more expensive. If the energy is to be provided from an external energy source, cabling between the damper and the energy source is required, which also makes the installation of such a damper more expensive.

The invention has for its object to remedy or reduce at least one of the drawbacks of the prior art or at least provide a useful alternative to the prior art.

The object is achieved through features which are specified in the description below and in the claims that follow.

Trials carried out by the inventor have shown that permanent magnets arranged on one or both sides of an anchor plate may be suitable for providing a damper for a suspended instrument casing. The solution is compact and inexpensive to produce and without the drawbacks connected with the use of a gyro- or fluid-based damper or a friction brake.

In particular, it has turned out that the use of a magnet system is advantageous to reduce the physical size of the damper mechanism. The ferrite material is arranged on the magnet end portions facing away from the anchor plate.

Orienting the magnets multipolarly in a circular form on one side or on either side of the anchor plate has turned out to be particularly advantageous. Using multipolarly oriented magnet systems with a ferrite material arranged on the magnet end portions facing away from the anchor plate has turned out even more particularly advantageous.

In a first aspect, the invention relates to a damper for damping pendular movements of instruments or an instrument casing, the damper including an electrically conductive anchor plate and a casing, the casing and the anchor plate being rotatable relative to each other, and either the anchor plate or the casing being supported on an axle; the casing being provided with at least one magnet and this in such a way that: at one pole, the magnet is provided with a backing plate, constituted by a ferrite-containing material, and the magnet and the backing plate constitute a magnet system; and the magnet system faces the anchor plate with at least one pole.

In one embodiment, the damper may be provided with a mounting bracket for attachment to a base. At its end portions, the axle may be provided with bracket arms. The axle may be fixedly attached to the bracket arms. The anchor plate may be immovable relative to the mounting bracket of the damper. In this embodiment, the anchor plate will be immovable relative to a base to which the damper is fixed while the casing is rotatable relative to the base.

In another embodiment, at least four magnetic poles facing one side of the anchor plate may be arranged in the casing. When sintered magnets with different sectors of different polarities are used, four magnetic poles may be formed by one magnet piece. When conventional two-pole magnets or sector magnets are used, four magnetic poles may be formed by four separate magnets or four sector magnets. In yet another embodiment, at least six magnetic poles facing one side of the anchor plate may be arranged in the casing.

In yet another embodiment, there may be, in the casing, at least one magnetic pole facing one side of the anchor plate and at least one magnetic pole facing the opposite side of the anchor plate. In the casing may be arranged at least four magnetic poles facing one side of the anchor plate and at least four magnetic poles facing the opposite side of the anchor plate. In the casing may be arranged at least six magnetic poles facing one side of the anchor plate and at least six magnetic poles facing the opposite side of the anchor plate.

The magnets may be arranged multipolarly. In one embodiment, the magnets may be electromagnets. In an alternative embodiment, the magnets may be permanent magnets.

The casing may be provided with at least one recess facing one side of the anchor plate. The backing plate may be attached in the bottom portion of the recess. The recess may be provided with at least four magnets or one multipolar magnet piece. The recess may form a circular recess.

In an alternative embodiment, at least one magnet having a non-covered pole facing the anchor plate may be surrounded, on its other faces, by a jacket formed by a ferrite-containing material for the formation of the magnet system.

The casing may be provided with means for the attachment of the instrument casing. The casing may be designed to surround the anchor plate.

The anchor plate may be provided with a tongue projecting outside the casing through a slot in the casing, and the tongue may be provided with a bore for the attachment of the instrument casing. In this embodiment, the casing may be attached to the base and the anchor plate is movable relative to the base.

The invention also relates to a rotatable or tiltable platform provided with a damper for an instrument or an instrument casing as described above.

In a second aspect, the invention relates to a method of damping pendular movements of instruments or an instrument casing attached to a rotatable or tiltable platform, in which the instruments or instrument casing are/is attached to a damper as described above.

In a third aspect, the invention relates to the use of a damper as described above for the rotatable attachment of an instrument or an instrument casing to a rotatable or tiltable platform.

In what follows is described an example of a preferred embodiment which is visualized in the accompanying drawings, in which:
Figures 1A-E show, schematically, known combinations of a ferrite-containing material and one or more magnets in a magnet system;
Figure 2 shows a perspective view of a casing for an eddy current damper and a mounting bracket in accordance with the invention;
Figure 3 shows a side view of the casing for the eddy current damper and a mounting bracket;
Figure 4 shows, on a larger scale, a section II-II of figure 3;
Figure 5 shows, on the same scale as figure 2, an end view of the casing;
Figure 6 shows, on the same scale as figure 4, a section IV-IV of figure 5;
Figure 7 shows an alternative embodiment of the invention in the same section IV-IV;
Figure 8 shows, on another scale, a perspective view of the eddy current damper provided with an instrument casing;
Figure 9 shows the same as figure 4, but in an alternative embodiment; and
Figure 10 shows, on a larger scale, an alternative embodiment.

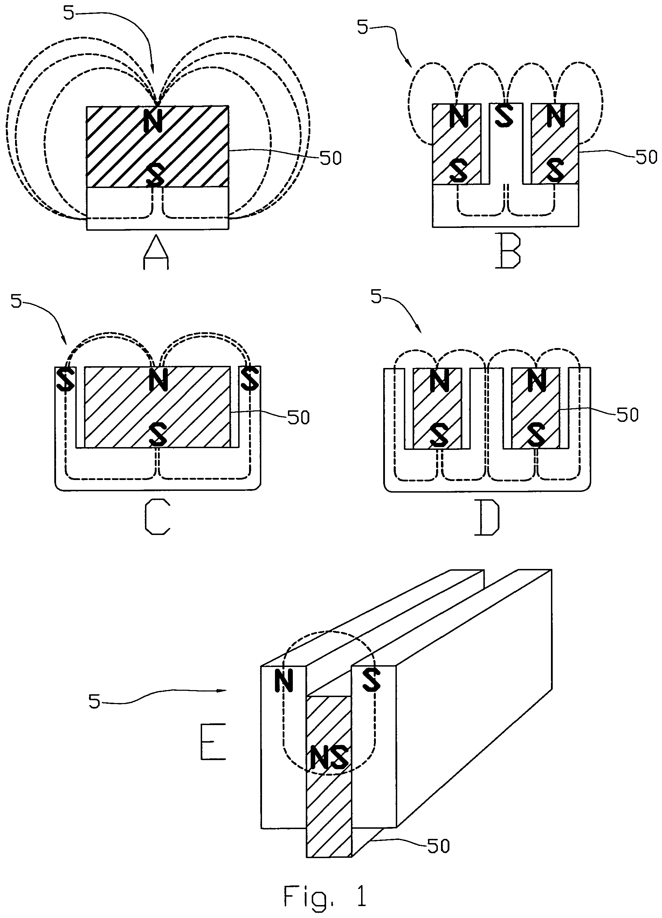

In the drawings, the reference numeral 5 indicates a magnet system including a magnet 50 and a ferrite-containing material. Figures 1A-E show as the prior art how the magnet 50 may be combined with and partly surrounded by a ferrite-containing material in different ways. According to one producer's information, the magnet system 5 shown in figure 1A will increase the magnetic force by a factor of 1.3. Correspondingly, the magnetic force will be increased by the factors 4.5; 6; 7 and 18 for the magnet systems 5 shown in figures 1B-1E, respectively. Figures 1B-E show that the "effective" north and south poles of the magnet system 5 may be of a geometrically different orientation from the north and south poles of the magnets 50.

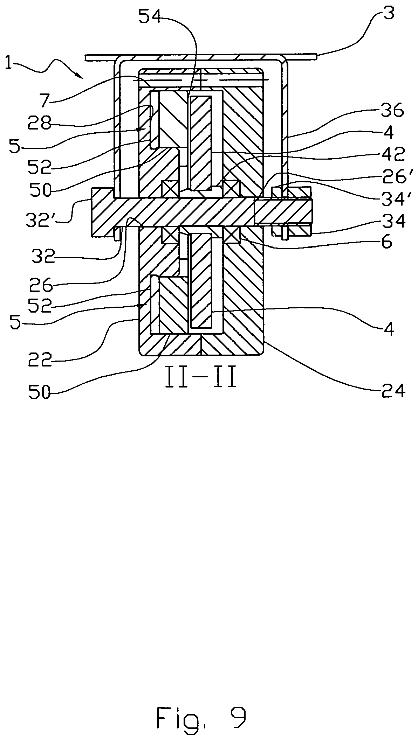

In the drawings, the reference numeral 1 indicates an eddy current damper in accordance with the invention. The eddy current damper 1 is provided with a circular casing 2 constituted by a first casing half 22 and a second casing half 24. The casing halves 22, 24 are provided with through openings, 26, 26', respectively. The casing 2 is rotatably supported around an axle 32 in the opening 26, 26'. The axle 32 is fixedly attached to the bracket arms 36 of a mounting bracket 3. In the embodiment shown, the axle 32 is provided with a nut 34 on its one threaded end portion on the external side of one bracket arm 36. In an alternative embodiment, the axle 32 is locked with a counter nut 34' on the internal side of the bracket arm 36 as shown in figure 9. In another alternative embodiment, the axle 32 is formed by a bolt with the bolt head 32' on the outside of a first bracket arm 36 and a nut on the outside of a second bracket arm 36 as shown in figure 9. The casing halves 22 and 24 are complementarily formed and are sealingly attached to each other, in a manner known *per se,* along the opposite portions of the casing halves 22, 24. The casing 2 may be constituted by a non-magnetic material such as plastic, stainless and acid-proof steel, brass or aluminium. The casing may also be constituted by a magnetic material such as S165M stainless steel.

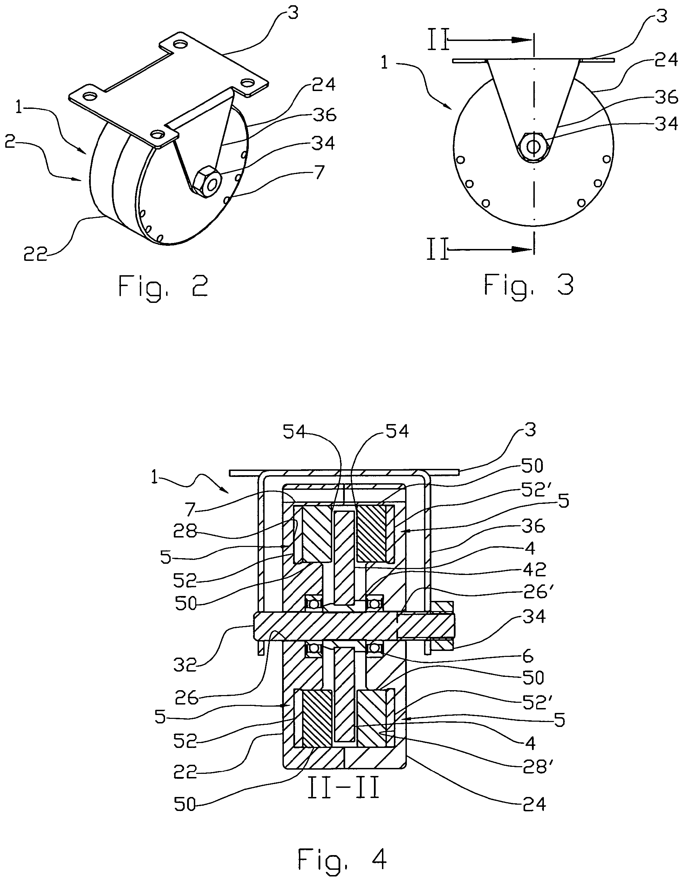

As shown in figures 4, 9 and 10, the axle 32 is provided with a mounting sleeve 42 at its middle portion. To the mounting sleeve 42, an anchor plate 4 is attached, extending radially from the mounting sleeve 42 between the casing halves 22 and 24. The anchor plate 4 may be disc-shaped as shown in figures 4 and 9. The anchor plate 4 may be constituted by an electrically conductive material.

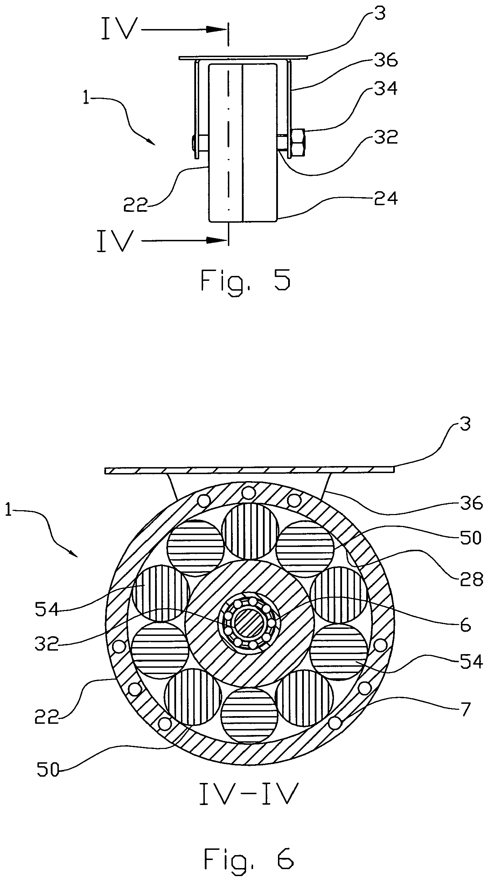

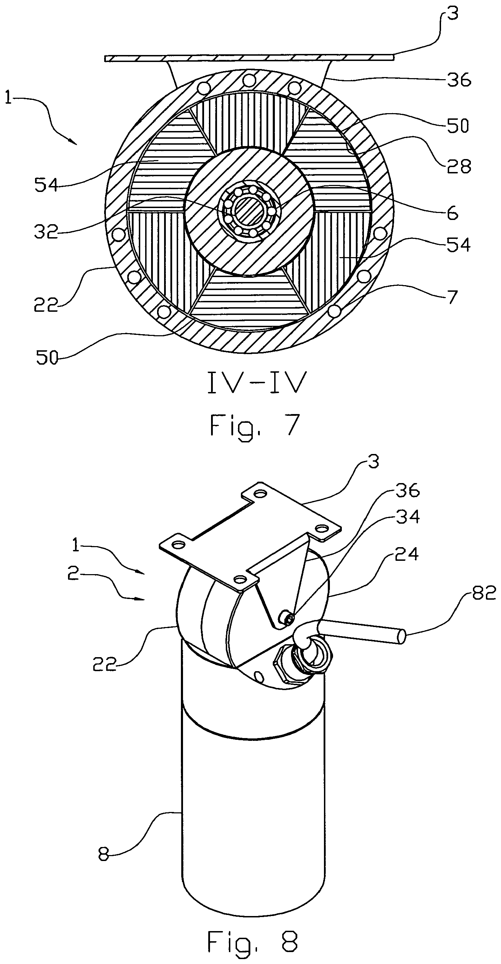

In a first embodiment, the casing halves 22, 24 are provided with circular recesses 28, 28' on their insides. At the bottom of the recesses 28, 28' the casing halves 22, 24 are provided with complementarily formed backing plates 52, 52'. On the backing plates 52, 52', in the recesses 28, 28' are placed multipolar permanent magnets 50 of the neodymium type. The alternating polarity of a pole 54 is shown by respectively vertical and horizontal hatchings in figures 6 and 7 and by different line spacing in the hatchings in figures 4, 9 and 10.

On their insides, the casing halves 22, 24 are provided with bearings 6 of a type known *per se,* and the bearings 6 are not mentioned any further here. The casing halves 22, 24 are further provided with through openings 7. An instrument casing 8 may be attached, in a manner known *per se,* by means of the openings 7, as shown in figure 8. An instrument (not shown) in the instrument casing 8 communicates with the surroundings through a cable 82.

Via the casing 2, the instrument casing 8 is rotatably supported around the axle 32 and is therefore rotatable relative to the mounting bracket 3. The anchor plate 4 is fixedly attached to the axle 32 and therefore immovable relative to the mounting bracket 3. The magnet system 5 will thereby be moved relative to the anchor plate 4 when the instrument casing 8 rotates around the axle 32. Eddy currents thereby arise in the anchor plate 4 and the eddy currents will counteract the movement of the instrument casing 8 so that the movement is damped.

In an alternative embodiment, the magnets 50 are formed as sector magnets. Figure 7 shows an embodiment with six sector magnets 50. In a further alternative embodiment, there is at least one magnet 50 arranged in the casing 2, having a non-covered pole 54 facing the anchor plate 4 and being surrounded on its other surfaces by a jacket constituted by a ferrite-containing material as shown in figure 1C to increase the field strength of the magnet system 5.

A further alternative embodiment is shown in figure 9. In this embodiment, the eddy current damper 1 is provided with multipolar permanent magnets 50 on one side of the anchor plate 4. The other casing half 24 is formed with an even surface on its inside, without the recess 28'.

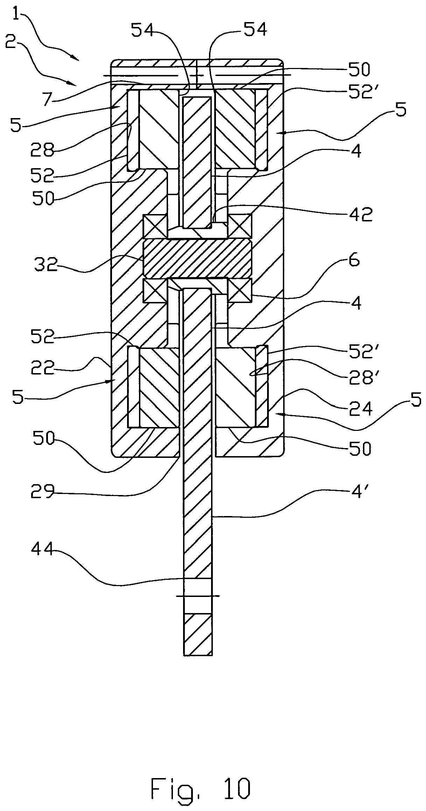

A further alternative embodiment is shown in figure 10. In this embodiment, the axle 32 is surrounded by the casing halves 22, 24 and supported in the casing halves 22, 24. The anchor plate 4 is attached to the axle 32 in the mounting sleeve 42. In one portion, the anchor plate 4 is formed with a tongue 4' projecting out of the casing 2 in a slot 29. The tongue 4' of the anchor plate 4 is provided with one or more bores 44 arranged to retain an instrument or instrument casing 8. The casing 2 is arranged to be fixed to a base by means of the openings 7. The instrument casing 8 will rotate around the axle 32 via the anchor plate 4. The anchor plate 4 will be moved relative to the magnet system 5. Eddy currents will arise in the anchor plate 4 and the eddy currents will counteract the movement of the instrument casing 8 so that the movement is damped. The person skilled in the art will understand that the same effect is achieved by letting the axle 32 be fixedly connected to the casing halves 22, 24 and by letting the anchor plate 4 be supported on the axle 32 (not shown).

By the casing 2 being formed of the material S165M stainless steel, measurements have shown that the damper 1 meets the SIMT 2010F22-30-507878 requirement that the magnetic field strength be less than 0.159 A/m (0.002 Gauss) measured at a distance of 2.1 m from the magnetic source.

## Claims

1. A damper (1) for damping pendular movements of instruments or an instrument casing (8), including an electrically conductive anchor plate (4) and a casing (2), the casing (2) and the anchor plate (4) being rotatable relative to each other, and either the casing (2) or the anchor plate (4) being supported on an axle (32); the casing (2) being provided with at least one magnet (50), **characterized in that**:
- the magnet (50) is provided, at one pole, with a backing plate (52, 52') constituted by a ferrite-containing material, and the magnet (50) and the backing plate (52) constitute a magnet system (5); and
- the magnet system (5) faces the anchor plate (4) with at least one pole (54).

2. The damper (1) in accordance with claim 1, **characterized in that** in the casing (2) are arranged at least one magnetic pole (54) facing one side of the anchor plate (4) and at least one magnetic pole (54) facing the opposite side of the anchor plate (4) .

3. The damper (1) in accordance with claim 1, **characterized in that** the magnets (50) are arranged multipolarly.

4. The damper (1) in accordance with claim 1, **characterized in that** the casing (2) is provided with at least one recess (28, 28') facing one side of the anchor plate (4).

5. The damper (1) in accordance with claim 4, **characterized in that** the backing plate (52, 52') is attached in a bottom portion of the recess (28, 28').

6. The damper (1) in accordance with claim 1, **characterized in that** the casing (2) is provided with means for attaching the instrument casing (8) .

7. The damper (1) in accordance with claim 1, **characterized in that** the casing (2) is designed to enclose the anchor plate (4).

8. The damper (1) in accordance with claim 1, **characterized in that** the anchor plate (4) is provided with a tongue 4' projecting outside the casing (2), the tongue 4' being provided with a bore 44 for the attachment of the instrument casing (8).

9. A rotatable or tiltable platform, **characterized in that** the rotatable or tiltable platform is provided with a damper in accordance with claim 1.

10. A method of damping pendular movements of instruments or an instrument casing (8) attached to a rotatable or tiltable platform, **characterized in that** the instruments or the instrument casing (8) are/is attached to a damper (1) in accordance with claim 1.

11. The use of a damper (1) in accordance with claim 1 to rotatably attach an instrument or an instrument casing (8) to a rotatable or tiltable platform.

## Patentansprüche

1. Dämpfer (1) zur Dämpfung von Pendelbewegungen von Instrumenten oder von einem Instrumentengehäuse (8), aufweisend eine elektrisch leitfähige Ankerplatte (4) und ein Gehäuse (2), wobei das Gehäuse (2) und die Ankerplatte (4) relativ zueinander drehbar sind, und wobei entweder das Gehäuse (2) oder die Ankerplatte (4) auf einer Achse (32) gelagert ist; wobei das Gehäuse (2) mindestens einen Magnet (50) aufweist, **dadurch gekennzeichnet, dass**:
- der Magnet (50) an einem Pol eine Rückenplatte (52, 52') aufweist, welche aus einem Material gebildet ist, welches Ferrit enthält, und wobei der Magnet (50) und die Rückenplatte (52) ein Magnetsystem (5) bilden; und
- das Magnetsystem (5) der Ankerplatte (4) mit mindestens einem Pol (54) gegenüberliegt.

2. Dämpfer (1) gemäss Anspruch 1, **dadurch gekennzeichnet, dass** im Gehäuse (2) mindestens ein Magnetpol (54) angeordnet ist, welcher einer Seite der Ankerplatte (4) gegenüberliegt und mindestens ein Magnetpol (54), welcher der gegenüberliegenden Seite der Ankerplatte (4) gegenüberliegt.

3. Dämpfer (1) gemäss Anspruch 1, **dadurch gekennzeichnet, dass** die Magnete (50) mehrpolig angeordnet sind.

4. Dämpfer (1) gemäss Anspruch 1, **dadurch gekennzeichnet, dass** das Gehäuse (2) mindestens eine Ausnehmung (28, 28') aufweist, welche einer Seite der Ankerplatte (4) gegenüberliegt.

5. Dämpfer (1) gemäss Anspruch 4, **dadurch gekennzeichnet, dass** die Rückenplatte (52, 52') in einem unteren Bereich der Ausnehmung (28, 28') befestigt ist.

6. Dämpfer (1) gemäss Anspruch 1, **dadurch gekennzeichnet, dass** das Gehäuse (2) Mittel zur Befestigung des Instrumentengehäuses (8) aufweist.

7. Dämpfer (1) gemäss Anspruch 1, **dadurch gekennzeichnet, dass** das Gehäuse (2) ausgebildet ist, die Ankerplatte (4) zu umschliessen.

8. Dämpfer (1) gemäss Anspruch 1, **dadurch gekennzeichnet, dass** die Ankerplatte (4) eine Zunge (4') aufweist, welche aus dem Gehäuse (2) herausragt, wobei die Zunge (4') eine Durchgangsöffnung (44) zur Befestigung des Instrumentengehäuses (8) aufweist.

9. Drehbare oder kippbare Plattform, **dadurch gekennzeichnet, dass** die drehbare oder kippbare Plattform einen Dämpfer gemäss Anspruch 1 aufweist.

10. Verfahren zur Dämpfung von Pendelbewegungen von Instrumenten oder von einem Instrumentengehäuse (8), welche/welches an einer drehbaren oder kippbaren Plattform befestigt sind/ist, **dadurch gekennzeichnet, dass** die Instrumente oder das Instrumentengehäuse (8) an einem Dämpfer (1) gemäss Anspruch 1 befestigt sind/ist.

11. Verwendung eines Dämpfers (1) gemäss Anspruch 1 zur drehbaren Befestigung eines Instruments oder eines Instrumentengehäuses (8) an einer drehbaren oder kippbaren Plattform.

## Revendications

1. Un amortisseur (1) pour amortir des mouvements pendulaires d'instruments ou d'un boitier d'instruments (8) comprenant une plaque d'ancrage conductrice d'électricité (4) et un boitier (2), le boitier (2) et la plaque d'ancrage (4) étant rotatives l'une par rapport à l'autre, et soit la plaque d'ancrage (4) soit le boitier (2) étant supporté sur un axe (32) ; le boitier (2) comportant au moins un aimant (50), **caractérisé en ce que** :
- au niveau d'un pôle, l'aimant (50) comporte une plaque d'appui (52, 52') constituée d'un matériau contenant de la ferrite, et l'aimant (50) et la plaque d'appui (52) constituent un système magnétique (5) ; et
- le système magnétique (5) fait face à la plaque d'ancrage (4) au niveau d'au moins un pôle (54).

2. L'amortisseur (1) selon la revendication 1, **caractérisé en ce que** dans le boîtier (2), sont disposés au moins un pôle magnétique (54) faisant face à un côté de la plaque d'ancrage (4) et au moins un pôle magnétique (54) faisant face au côté opposé de la plaque d'ancrage (4).

3. L'amortisseur (1) selon la revendication 1, **caractérisé en ce que** les aimants (50) sont disposés de manière multipolaire.

4. L'amortisseur (1) selon la revendication 1, **caractérisé en ce que** le boîtier (2) comporte au moins un évidement (28, 28') faisant face à un côté de la plaque d'ancrage (4).

5. L'amortisseur (1) selon la revendication 4, **caractérisé en ce que** la plaque d'appui (52, 52') est attachée dans une partie inférieure de l'évidement (28, 28').

6. L'amortisseur (1) selon la revendication 1, **caractérisé en ce que** le boîtier (2) comporte des moyens pour attacher le boîtier d'instruments (8).

7. L'amortisseur (1) selon la revendication 1, **caractérisé en ce que** le boîtier (2) est conçu pour renfermer la plaque d'ancrage (4).

8. Le dispositif (1) selon la revendication 1, **caractérisé en ce que** la plaque d'ancrage (4) est munie d'une languette (4') faisant saillie vers l'extérieur du boîtier (2), la languette (4') étant munie d'un alésage (44) pour l'attachement du boîtier d'instrument (8).

9. Une plateforme rotative ou pivotable, **caractérisée en ce que** la plateforme rotative ou pivotable comporte un amortisseur selon la revendication 1.

10. Un procédé d'amortissement de mouvement pendulaire d'instruments ou d'un boîtier d'instruments (8) attaché à une plateforme rotative ou pivotable, **caractérisé en ce que** les instruments ou le boîtier d'instruments (8) est/sont attaché/s à un amortisseur (1) selon la revendication 1.

11. L'utilisation d'un amortisseur (1) selon la revendication 1 pour attacher des manière rotative un instrument ou un boîtier d'instruments (8) à une plateforme rotative ou pivotable.
